(19) Europäisches Patentamt

European Patent Office

Office européen des brevets

(11) **EP 0 851 158 B1**

(12) **FASCICULE DE BREVET EUROPEEN**

(45) Date de publication et mention
de la délivrance du brevet:
**16.04.2003 Bulletin 2003/16**

(51) Int Cl.⁷: **F16J 15/08**

(21) Numéro de dépôt: **97403110.6**

(22) Date de dépôt: **22.12.1997**

(54) **Joint statique métallique en U**

Statische, U-förmige Metalldichtung

Static U-shaped metallic seal

(84) Etats contractants désignés:
**DE GB IT**

(30) Priorité: **31.12.1996 FR 9616277**

(43) Date de publication de la demande:
**01.07.1998 Bulletin 1998/27**

(73) Titulaire: **SOCIETE NATIONALE D'ETUDE ET DE
CONSTRUCTION DE MOTEURS D'AVIATION,
"S.N.E.C.M.A."
75015 Paris (FR)**

(72) Inventeurs:
• **Delaunay, Isabelle
27120 Menilles (FR)**
• **Poulin, Etienne
27490 Autheil-Authouillet (FR)**
• **Dufailly, Alain
76150 La Vaupaliere (FR)**

(74) Mandataire: **Thévenet, Jean-Bruno et al
Cabinet Beau de Loménie
158, rue de l'Université
75340 Paris Cédex 07 (FR)**

(56) Documents cités:
**EP-A- 0 241 350          EP-A- 0 711 938
US-A- 3 378 269          US-A- 3 971 566**

Printed by Jouve, 75001 PARIS (FR)

## Description

Domaine de l'invention

La présente invention a *pour* objet un joint statique métallique en U comportant un corps annulaire et des première et seconde lèvres raccordées latéralement au corps annulaire et s'étendant transversalement par rapport à l'axe du joint de manière à définir, en demi-coupe axiale, la forme d'un U couché.

L'invention concerne plus particulièrement les joints destinés à être utilisés dans des environnements sévères avec des conditions de fonctionnement extrêmes, notamment sous haute pression et dans des plages de température très élevées ou au contraire très basses.

Art antérieur

On a déjà proposé divers types de joints métalliques présentant un profil en V ou U.

Des exemples de tels joints sont décrits notamment dans les documents EP-A-0 241 350 et EP-A-0 711 938.

De tels types de joints permettent de résoudre un certain nombre de problèmes et présentent des caractéristiques généralement satisfaisantes en termes de performances et de durée de vie. Ces joints en V ou U restent cependant relativement coûteux à fabriquer et ne peuvent pas être de dimensions trop réduites sous peine de perdre leurs qualités. Le niveau d'étanchéité de ces joints peut également ne pas donner entière satisfaction dans certaines conditions de fonctionnement particulièrement difficiles.

Objet et description succincte de l'invention

L'invention vise à remédier aux inconvénients précités et à réaliser un joint statique qui offre une restitution élastique accrue, qui puisse être réalisé dans des dimensions relativement réduites dans le sens radial et le sens axial sans perdre ses qualités et qui permette ainsi la réalisation d'assemblages et de raccords plus légers mettant en oeuvre des brides légères et relativement peu rigides.

L'invention vise encore à réaliser des joints statiques dont la fabrication soit simplifiée et qui présentent cependant d'excellentes qualités sur les plans de la résistance mécanique et de la résistance aux agressions dans des conditions sévères de température, de pression, de vibrations et d'agression chimique.

Ces buts sont atteints grâce à un joint statique métallique en U comportant un corps annulaire et des première et seconde lèvres raccordées latéralement au corps annulaire et s'étendant transversalement par rapport à l'axe du joint de manière à définir, en demi-coupe axiale, la forme d'un U couché, connu du document EP-A-0 241 350,

caractérisé en ce que le profit du joint en demi-coupe axiale comprend une première partie courbe en forme de C délimitée par une première surface extérieure courbe exempte d'angles et par une deuxième surface intérieure courbe exempte d'angles pour former le corps annulaire, des deuxième et troisième parties de liaison constituant les première et seconde lèvres, chacune des deuxième et troisième parties de liaison comprenant une troisième surface extérieure plane perpendiculaire à l'axe du joint et raccordée tangentiellement à la première surface extérieure courbe, et une quatrième surface intérieure plane raccordée tangentiellement à la deuxième surface intérieure courbe et inclinée d'un angle $i$ compris entre environ 15° et 30° par rapport à un plan de symétrie du joint perpendiculaire à l'axe du joint, et des quatrième et cinquième parties terminales convexes qui assurent l'étanchéité et sont raccordées aux deuxième et troisième parties de liaison, ces quatrième et cinquième parties étant délimitées chacune, d'une part, par une cinquième surface intérieure plane prolongeant la quatrième surface intérieure plane et, d'autre part, par une sixième surface extérieure courbe formant saillie par rapport à la troisième surface extérieure plane, ladite sixième surface extérieure courbe étant raccordée de façon progressive à la troisième surface extérieure plane.

La sixième surface extérieure courbe de chacune des quatrième et cinquième parties terminales convexes présente une zone de contact centrale dont le rayon de courbure $R_3$ est plus grand que le rayon de courbure $R_4$ d'une zone d'extrémité située au voisinage de l'extrémité libre de la partie terminale convexe correspondante.

Selon un mode de réalisation particulier, la zone de contact centrale présente un rayon de courbure $R_3$ compris entre 0,45 et 0,65 mm.

Selon une caractéristique particulière, la sixième surface extérieure courbe est raccordée à la troisième surface extérieure plane par une zone concave courbe dont le rayon de courbure $R_5$ est voisin de celui ($R_4$) de la zone d'extrémité de la sixième surface extérieure courbe.

Selon une autre caractéristique particulière, la deuxième surface intérieure courbe de la première partie courbe en forme de C présente un rayon de courbure $R_2$ voisin de celui ($R_3$) de la zone de contact centrale de chacune des quatrième et cinquième parties convexes.

Avantageusement, la première surface extérieure courbe de la première partie courbe en forme de C présente un rayon de courbure $R_1$ qui est de l'ordre du double du rayon de courbure $R_2$ de la deuxième surface intérieure courbe.

Le joint selon l'invention est encore caractérisé en ce que la première épaisseur $e_1$ du corps annulaire définie par la différence entre le diamètre extérieur $D_{ext}$ du joint et le diamètre intérieur $D_{int}$ du joint est supérieure à la deuxième épaisseur $e_2$ de chacune des deuxième et troisième parties de liaison au niveau du raccordement de la troisième surface extérieure plane et de la quatrième surface intérieure plane respectivement à la première surface extérieure courbe et à la deuxième surface Intérieure courbe, et en ce que ladite deuxième épaisseur $e_2$ est elle-même supérieure à la troisième épaisseur $e_3$ de chacune des deuxième et troisième parties de liaison au niveau de leur raccordement aux quatrième et cinquième parties terminales convexes

Selon un mode de réalisation préférentiel, la distance H entre les deux zones de contact centrales est du même ordre de grandeur que la distance L entre, d'une part, un plan passant par les extrémités libres des parties terminales et, d'autre part, un plan parallèle tangent à la première surface extérieure courbe.

A titre d'exemple, l'épaisseur e d'écrasement des parties terminales est de l'ordre de 9 à 20 centièmes de millimètres et de préférence comprise entre 15 et 20 centièmes de millimètres.

De préférence, la zone de contact centrale de la sixième surface extérieure courbe s'étend au moins sur un arc de 40°.

Le joint selon l'invention peut être réalisé en Inconel et peut comporter un revêtement en argent dont l'épaisseur est supérieure ou égale à 10 micromètres.

Le joint selon l'invention peut en particulier être réalisé dans de relativement petites dimensions, par exemple avec un diamètre externe compris entre 10 et 65 mm.

Le joint est adapté pour être disposé dans une gorge (140 ; 240) de faible encombrement formée à l'interface entre deux pièces (101, 102 ; 201, 202) à raccorder, ladite gorge (140; 240) présentant une section sensiblement rectangulaire dont la largeur est voisine de 3 mm et la hauteur est voisine de 2 mm.

Brève description des dessins

D'autres caractéristiques et avantages de l'invention ressortiront de la description suivante de modes particuliers de réalisation, en référence aux dessins annexés, sur lesquels :

- la Figure 1 est une vue de trois-quarts (coupée) en perspective d'un exemple de joint en U conforme à l'invention,
- la Figure 2 est une vue schématique en quart-coupe axiale d'un exemple de joint en U selon l'invention, permettant de repérer certains paramètres dimensionnels,
- la Figure 3 est une vue en demi-coupe axiale d'un exemple préférentiel de joint en U selon l'invention, à l'état libre,
- la Figure 4 est une vue en demi-coupe axiale analogue à celle de la Figure 3, mais montrant en outre en pointillés la forme adoptée par le joint lorsqu'il est écrasé,
- la Figure 5 est une vue en demi-coupe axiale montrant un premier exemple d'assemblage à brides incorporant un joint en U selon l'invention, placé dans un logement ouvert radialement, et

- la Figure 6 est une vue en demi-coupe axiale montrant un deuxième exemple d'assemblage à brides incorporant un joint en U selon l'invention placé dans un logement fermé radialement.

Description détaillée de modes particuliers de réalisation

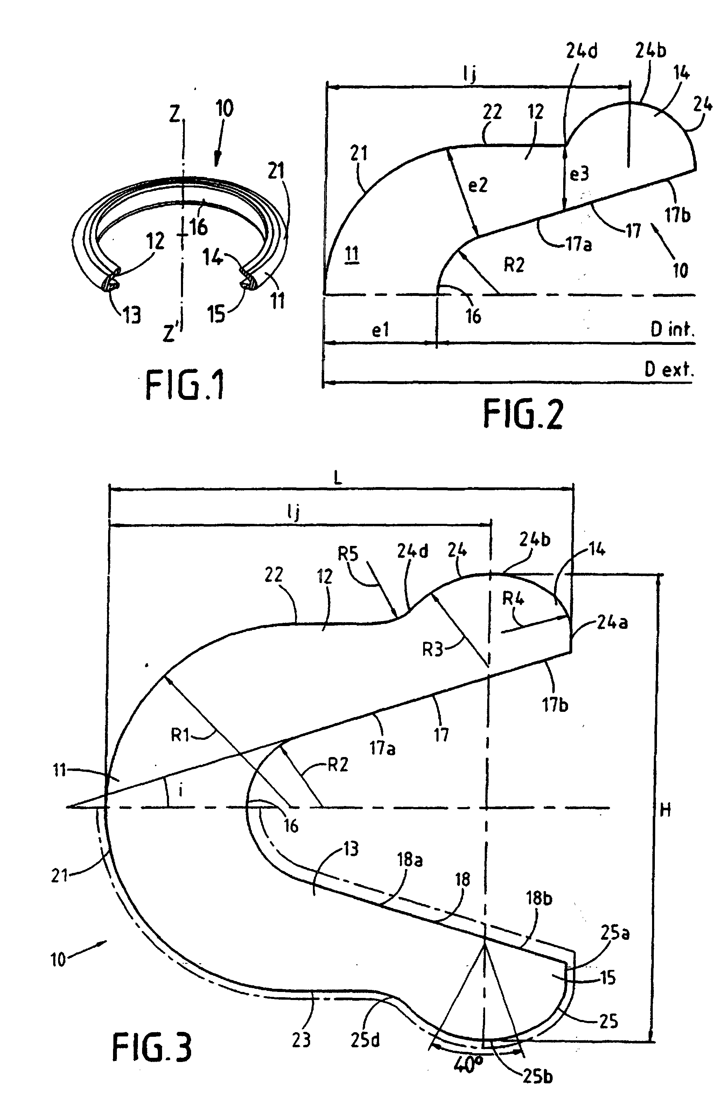

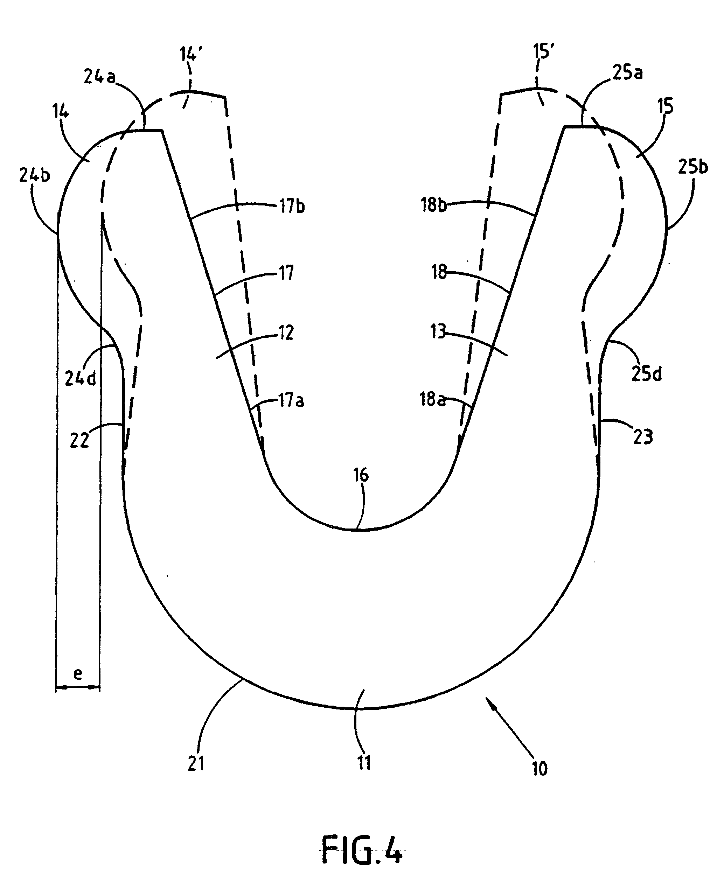

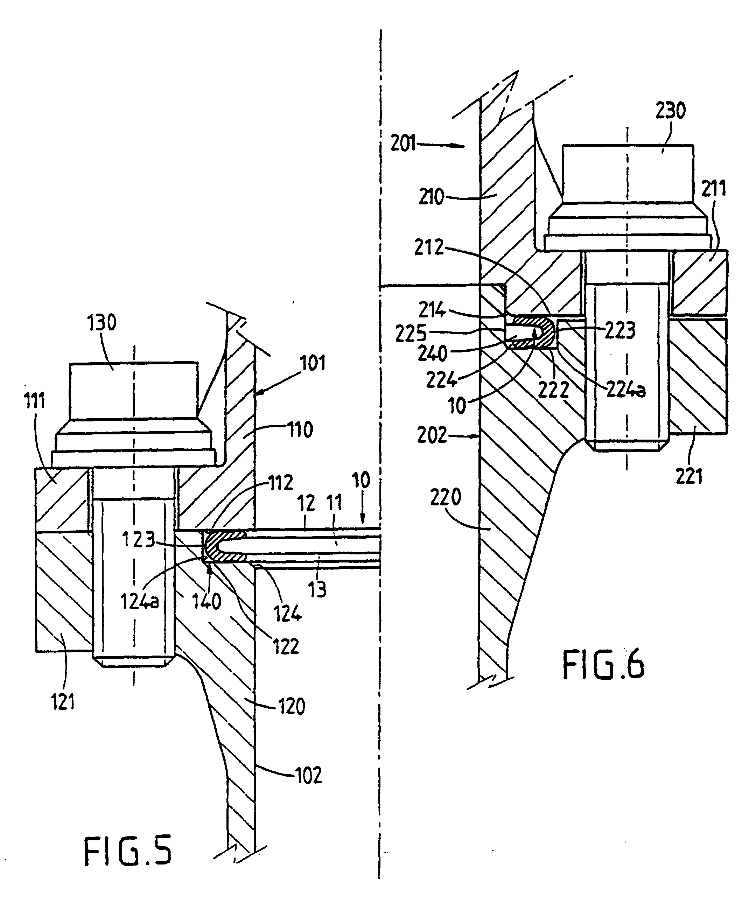

La Figure 1 montre l'aspect général d'un joint 10 selon l'invention, qui comprend un corps annulaire 11 d'axe Z'Z, prolongé latéralement par des lèvres 12,13 elles-mêmes associées à des parties terminales 14, 15 définissant les surfaces de contact du joint 10. Le joint 10 présente, en demi-coupe axiale (Figures 3 et 4), la forme d'un U couché. Sur les dessins, on a représenté un joint 10 à gorge intérieure pour lequel les lèvres 12, 13 formant les branches du U sont toumées vers l'axe du joint Z'Z. L'invention s'applique toutefois également à des modes de réalisation à gorge extérieure dans lesquels les branches du U sont tournées vers l'extérieur par rapport à l'axe Z'Z.

Comme on peut le voir notamment sur la Figure 3, en position de repos, le profil du joint 10 en demi-coupe axiale comprend une partie courbe 11 en forme de C délimitée par une surface extérieure courbe 21 exempte d'angles et par une surface intérieure 16 également courbe et exempte d'angles, la partie courbe 11 constituant le corps annulaire du joint.

La surface extérieure 21 présente un rayon de courbure $R_1$ relativement grand qui peut être au moins de l'ordre du double du rayon de courbure $R_2$ de la surface intérieure 16.

La partie courbe 11 est prolongée latéralement par des parties de liaison 12, 13 définissant les lèvres du joint, chacune de ces parties de liaison 12,13 comprenant une surface extérieure plane 22, 23 perpendiculaire à l'axe du joint et raccordée tangentiellement à la surface extérieure courbe 21, et une surface intérieure plane 17a, 18a qui est raccordée tangentiellement à la surface intérieure courbe 16 et forme un angle i de préférence compris entre environ 15° et 30° par rapport à un plan de symétrie du joint perpendiculaire à l'axe Z'Z du joint.

Les parties terminales convexes 14, 15 qui assurent l'étanchéité à l'extrémité des lèvres du joint sont raccordées aux parties de liaison 12, 13 de façon progressive, sans angle rentrant. Les parties terminales convexes 14, 15 sont ainsi délimitées chacune, d'une part, par une surface intérieure plane 17b, 18b qui prolonge et est dans l'alignement de la surface intérieure plane 17a, 18a, de manière à former avec celle-ci une surface plane continue 17,18 et, d'autre part, par une surface extérieure courbe 24, 25 formant saillie par rapport à la surface extérieure plane 22, 23, mais raccordée de façon progressive à cette dernière.

La surface extérieure courbe 24, 25 de chacune des parties terminales convexes 14, 15 présente une zone de contact centrale 24b, 25b dont le rayon de courbure $R_3$ est plus grand que le rayon de courbure $R_4$ d'une zone d'extrémité 24a, 25a située au voisinage de l'extrémité libre de la partie terminale convexe correspondante 14,15.

Afin d'éviter tout angle rentrant, la surface extérieure courbe 24, 25 est raccordée à la surface extérieure plane 22, 23 par une zone concave courbe 24d, 25d dont le rayon de courbure $R_5$ est inférieur au rayon de courbure $R_3$ de la zone de contact centrale 24b, 25b et peut être par exemple voisin du rayon de courbure $R_4$ de la zone d'extrémité 24a, 25a.

La zone de contact centrale 24b, 25b s'étend au moins sur un arc de 40° et présente un état de surface qui peut être d'une qualité supérieure à celle de l'état de surface du reste de la surface extérieure 24a, 24d, 22, 21, 23, 25d, 25a du joint et a fortiori à celle de l'état de surface de la surface intérieure 16, 17, 18 du joint qui n'est pas en contact avec les pièces de l'assemblage dont l'étanchéité doit être assurée par le joint.

Les Figures 2 et 3 définissent différents paramètres concernant les caractéristiques dimensionnelles du joint 10.

On voit ainsi sur la Figure 2 l'épaisseur $e_1$ du corps annulaire 11 qui est définie par la différence entre le diamètre extérieur $D_{ext}$ du joint et le diamètre intérieur $D_{int}$ du joint.

L'épaisseur $e_2$ des parties de liaison 12, 13 est définie au niveau du raccordement des surfaces extérieures planes 22,23 avec la surface extérieure courbe 21 et des surfaces intérieures planes 17a, 18a avec la surface intérieure courbe 16, c'est-à-dire au niveau du raccordement avec le corps annulaire 11.

L'épaisseur $e_3$ des parties de liaison 12, 13 est définie au niveau de leur raccordement aux parties terminales convexes 14, 15.

Comme on l'a Indiqué précédemment, les raccordements des différentes parties du joint 10 entre elles sont effectués de façon progressive sans angle vif.

Selon une forme optimisée du joint 10, les épaisseurs $e_1$, $e_2$, $e_3$ définies ci-dessus sont reliées entre elles par l'inégalité suivante :

$$e_1 > e_2 > e_3$$

Comme on peut le voir sur les dessins, l'épaisseur des parties terminales convexes 14, 15 des lèvres du joint est elle-même supérieure à l'épaisseur $e_3$ des parties de liaison 12, 13 au niveau de leur raccordement aux parties terminales convexes 14, 15.

Le rayon de courbure $R_2$ de la surface intérieure courbe 16 de la partie courbe 11 peut présenter une valeur voisine de celle du rayon de courbure $R_3$ de la zone de contact centrale 24b, 25b des parties terminales convexes 14, 15.

Avantageusement, la distance H entre les deux zones de contact centrales 24b, 25b est du même ordre de grandeur que la distance L entre, d'une part, un plan passant par les extrémités libres des parties terminales 14,15 et, d'autre part, un plan parallèle tangent à la surface extérieure courbe 21.

Sur les Figures 2 et 3, le paramètre lj représente la largeur utile du joint définie par la différence entre le diamètre extérieur $D_{ext}$ et le diamètre au point de contact dans la zone de contact 24b, 25b.

Le joint selon l'invention peut être réalisé par exemple en Inconel 718 et peut recevoir un revêtement par exemple en argent, réalisé par dépôt électrolytique.

Le joint en U est ainsi apte à être mis en oeuvre dans des conditions de haute pression pouvant aller jusqu'à 200 bar, ainsi que dans un large domaine de températures, par exemple de l'ordre de 20 K à 930 K et se trouve compatible avec des fluides agressifs présents dans les applications spatiales, tels que par exemple $LH_2$, $LO_x$, $LN_2$, GHe et des gaz de combustion ($H_2 + O_2$).

La forme du joint en U selon l'invention a été définie de manière à permettre une restitution utile maximale. Par ailleurs, avec une zone de contact 24b,25b unique de configuration torique, il existe une parfaite maîtrise du point de contact du joint et la largeur de contact peut être adaptée à l'effort de contact et à la dureté du revêtement.

Le choix d'un matériau tel que l'Inconel permet de travailler dans le domaine plastique.

La configuration du joint selon l'invention est particulièrement adaptée à la réalisation de joints de petites sections présentant un diamètre $D_{ext}$ compris par exemple entre 10 mm et 65 mm.

La construction géométrique du joint est facilitée si le rayon de courbure $R_3$ dans la zone de contact est de l'ordre de 0,45 à 0,65 mm.

La largeur L du joint peut avantageusement être comprise entre 2 mm et 3 mm de même que la hauteur H du joint peut être comprise de préférence entre 0,2 et 0,3 mm.

Les rayons de courbure $R_4$, $R_5$ des zones 24a, 25a, 24d, 25d des parties terminales convexes 14,15, qui sont plus petits que le rayon de courbure $R_3$ de la zone de contact 24b, 25b de la surface courbe extérieure 24, 25 des parties terminales convexes 14,15 sont avantageusement compris entre 0,2 et 0,4 mm.

L'épaisseur $\underline{e}$ d'écrasement des parties terminales 14,15 peut être de l'ordre de 9 à 20 centièmes de millimètre, et de préférence comprise entre 15 et 20 centièmes de millimètre. La Figure 4 montre en traits continus le joint à l'état libre et, en traits discontinus, la position des parties terminales 14',15' lorsque le joint est en service et supporte un écrasement $\underline{e}$.

L'épaisseur du revêtement, par exemple en argent, formé sur la surface du joint 10, est supérieure ou égale à 10 micromètres.

Cette épaisseur peut être de l'ordre de 10 à 20 micromètres pour des joints dont le diamètre est compris entre 10 et 20 mm et de l'ordre de 20 à 40 micromètres pour des joints dont le diamètre est compris entre 20 et 65 mm.

L'épaisseur $e_3$ des parties de liaison 12,13 au niveau de leur raccordement aux parties terminales 14,15 est de préférence égale au minimum à 0,25 mm.

On notera qu'un joint à gorge intérieure, tel que celui représenté sur la Figure 1, permet d'obtenir un effet autoclave qui contribue à une bonne étanchéité à haute pression.

Pour fonctionner convenablement, c'est-à-dire produire une largeur de contact minimum d'au moins 0,05 mm et assurer une étanchéité correcte, l'effort de serrage minimum auquel doit être soumis un joint en U 10 est de l'ordre de F = 7 daN/mm.

La restitution utile du joint 10 dépend de la limite d'effort au chargement, c'est-à-dire de l'effort minimum pour maintenir l'étanchéité, qui peut être par exemple de 4,5 daN/mm. Cette restitution utile $R_u$ peut être située, y compris à l'écrasement minimum, dans la plage de valeurs comprise entre 0,04 et 0,08 mm.

Les Figures 5 et 6 montrent des exemples de mise en oeuvre d'un joint en U 10 conforme à l'invention dans des assemblages à brides.

La Figure 5 montre un exemple de montage à logement ouvert 140 où le joint 10 est disposé sur un lamage 122 d'une première pièce 102 constituée par une conduite 120 terminée par une bride 121. L'une des faces 112 du logement 140 est constituée par la face frontale d'une bride 111 d'une seconde pièce 101 définissant également un tronçon de conduite 110. Les brides 111, 121 sont assemblées par des moyens de liaison tels que des boulons 130. Le logement 140 peut présenter un lamage 122 sur lequel sont formés un congé 124a ou un chanfrein 124. Le joint 10 est disposé dans le logement 140 de telle sorte qu'il n'y ait pas de contact entre ce joint et le chanfrein 124 ou le congé 124a.

La Figure 6 montre un autre exemple de montage à logement fermé 240 où le joint 10 est interposé entre deux pièces 201 et 202 définissant chacune un tronçon de conduite 210, 220 et une bride 211, 221, les brides étant réunies par des moyens de liaison tels que des boulons 230. Dans le cas de la Figure 6, le logement 240 est délimité sur trois côtés par des parois 223, 222, 225 de la pièce 202 et, sur le quatrième côté, par la paroi 212 de la pièce 201. L'extrémité 225 de la pièce 202 qui se prolonge au-delà de la paroi 212 pénètre dans une encoche 213 de la pièce 201 et vient en contact avec ladite pièce 201 de façon à jouer le rôle d'un limiteur d'écrasement du joint 10, un jeu étant ménagé entre le corps des brides 211 et 221 (jeu appui talon). Comme dans le cas de la Figure 5, le joint 10 est disposé dans le logement 240 de manière à ne pas être en contact avec des congés 224 et 224a ou chanfreins 214 présents au niveau des arêtes du logement 240. Le joint 10 est naturellement adapté pour être incorporé dans d'autres types d'assemblages et les modes de réalisation des Figures 5 et 6 ne constituent que des exemples non limitatifs.

**Revendications**

1. Joint statique métallique en U comportant un corps annulaire (11) et des première et seconde lèvres (12,13) raccordées latéralement au corps annulaire (11) et s'étendant transversalement par rapport à l'axe du joint de manière à définir, en demi-coupe axiale, la forme d'un U couché,
   **caractérisé en ce que** le profil du joint en demi-coupe axiale comprend une première partie courbe (11) en forme de C délimitée par une première surface extérieure courbe (21) exempte d'angles et par une deuxième surface intérieure courbe (16) exempte d'angles pour former le corps annulaire, des deuxième et troisième parties de liaison (12, 13) constituant les première et seconde lèvres, chacune des deuxième et troisième parties de liaison (12,13) comprenant une troisième surface extérieure plane (22, 23) perpendiculaire à l'axe du joint et raccordée tangentiellement à la première surface extérieure courbe (21), et une quatrième surface intérieure plane (17a, 18a) raccordée tangentiellement à la deuxième surface intérieure courbe (16) et inclinée d'un angle (i) compris entre environ 15° et 30° par rapport à un plan de symétrie du joint perpendiculaire à l'axe du joint, et des quatrième et cinquième parties terminales convexes (14,15) qui assurent l'étanchéité et sont raccordées aux deuxième et troisième parties de liaison (12,13), ces quatrième et cinquième parties (14,15) étant délimitées chacune, d'une part, par une cinquième surface intérieure plane (17b,18b) prolongeant la quatrième surface intérieure plane (17a, 18a) et, d'autre part, par une sixième surface extérieure courbe (24, 25) formant saillie par rapport à la troisième surface extérieure plane (22, 23), ladite sixième surface extérieure courbe (24, 25) étant raccordée de façon progressive à la troisième surface extérieure plane (22, 23).

2. Joint selon la revendication 1, **caractérisé en ce que** la sixième surface extérieure courbe (24, 25) de chacune des quatrième et cinquième parties terminales convexes (14, 15) présente une zone de contact centrale (24b, 25b) dont le rayon de courbure $R_3$ est plus grand que le rayon de courbure $R_4$ d'une zone d'extrémité (24a,25a) située au voisinage de l'extrémité libre de la partie terminale convexe correspondante (14, 15).

3. Joint selon la revendication 2, **caractérisé en ce que** la zone de contact centrale (24b, 25b) présente un rayon de courbure $R_3$ compris entre 0,45 et 0,65 mm.

4. Joint selon la revendication 2 ou la revendication 3, **caractérisé en ce que** la sixième surface extérieure courbe (24, 25) est raccordée à la troisième surface extérieure plane (22, 23) par une zone concave courbe (24d, 25d) dont le rayon de courbure $R_5$ est voisin de celui ($R_4$) de la zone d'extrémité (24a, 25a) de la sixième surface extérieure courbe (24, 25).

5. Joint selon l'une quelconque des revendications 2 à 4, **caractérisé en ce que** la deuxième surface intérieure courbe (16) de la première partie courbe (11) en forme de C présente un rayon de courbure $R_2$ voisin de celui ($R_3$) de la zone de contact centrale (24b,25b) de chacune des quatrième et cinquième parties convexes (14, 15).

6. Joint selon l'une quelconque des revendications 1 à 5, **caractérisé en ce que** la première surface extérieure courbe (21) de la première partie courbe (11) en forme de C présente un rayon de courbure $R_1$ qui est de l'ordre du double du rayon de courbure $R_2$ de la deuxième surface intérieure courbe (16).

7. Joint selon l'une quelconque des revendications 1 à 6, **caractérisé en ce que** la première épaisseur $e_1$ du corps annulaire (11) définie par la différence entre le diamètre extérieur $D_{ext}$ du joint et le diamètre intérieur $D_{int}$ du joint est supérieure à la deuxième épaisseur $e_2$ de chacune des deuxième et troisième parties de liaison (12, 13) au niveau du raccordement de la troisième surface extérieure plane (22, 23) et de la quatrième surface intérieure plane (17a, 18a) respectivement à la première surface extérieure courbe (21) et à la deuxième surface intérieure courbe (16), et **en ce que** ladite deuxième épaisseur $e_2$ est elle-même supérieure à la troisième épaisseur $e_3$ de chacune des deuxième et troisième parties de liaison (12,13) au niveau de leur raccordement aux quatrième et cinquième parties terminales convexes (14, 15).

8. Joint selon l'une quelconque des revendications 2 à 5, **caractérisé en ce que** la distance H entre les deux zones de contact centrales (24b, 25b) est du même ordre de grandeur que la distance L entre, d'une part, un plan passant par les extrémités libres des parties terminales (14,15) et, d'autre part, un plan parallèle tangent à la première surface extérieure courbe (21).

9. Joint selon l'une quelconque des revendications 1 à 8, **caractérisé en ce que** l'épaisseur e d'écrasement des parties terminales (14, 15) est de l'ordre de 9 à 20 centièmes de millimètres et de préférence comprise entre 15 et 20 centièmes de millimètres.

10. Joint selon l'une quelconque des revendications 2 à 9, **caractérisé en ce que** la zone de contact centrale (24b, 25b) de la sixième surface extérieure courbe (24, 25) s'étend au moins sur un arc de 40°.

11. Joint selon l'une quelconque des revendications 1 à 10, **caractérisé en ce qu'**il est réalisé en Inconel et comporte un revêtement en argent dont l'épaisseur est supérieure ou égale à 10 micromètres.

12. Joint selon l'une quelconque des revendications 1 à 11, **caractérisé en ce qu'**il comprend un diamètre externe $D_{ext}$ compris entre 10 mm et 65 mm.

13. Joint selon l'une quelconque des revendications 1 à 12, **caractérisé en ce qu'**il est adapté à un domaine de températures de l'ordre de 20 K à 930 K et à des pressions inférieures ou égales à 200 bar.

14. Joint selon l'une quelconque des revendications 1 à 13, **caractérisé en ce qu'**il est adapté pour être disposé dans une gorge (140 ; 240) de faible encombrement formée à l'interface entre deux pièces (101, 102; 201, 202) à raccorder, ladite gorge (140 ; 240) présentant une section sensiblement rectangulaire dont la largeur est voisine de 3 mm et la hauteur est voisine de 2 mm.

## Patentansprüche

1. Statische U-Metalldichtung, umfassend einen Ringkörper (11.) und eine erste und eine zweite Lippe (12, 13), die seitlich an den Ringkörper (11) angebunden sind und sich in Querrichtung bezüglich der Dichtungsachse derart erstrecken, dass sie im axialen Halbschnitt die Form eines umgelegten U bilden,

   **dadurch gekennzeichnet, dass** das Profil der Dichtung im axialen Halbschnitt eine erste Krümmungszone in Form eines C aufweist, begrenzt durch eine erste äußere gekrümmte Fläche (21) ohne Winkel und durch eine zweite innere gekrümmte Fläche (16) frei von Winkeln, um den Ringkörper zu bilden, eine zweite und eine dritte Verbindungszone (12, 13), welche die erste und die zweite Lippe bilden, wobei die zweite und auch die dritte Verbindungszone (12, 13) eine dritte äußere ebene Fläche (22, 23) aufweisen, rechtwinklig zu der Dichtungsachse verlaufend und tangential an die erste äußere gekrümmte Fläche (21) anschließend, und eine vierte, innere ebene Fläche (17a, 18a), die tangential an die zweite, innere gekrümmte Fläche (16) anschließt und unter einem Winkel (i) zwischen 15° und 30° bezüglich einer Symmetrieebene der Dichtung rechtwinklig zu deren Achse geneigt ist, und eine vierte und eine fünfte konvexe Abschlusszone (14, 15), die die Dichtigkeit garantieren und die an die zweite bzw. die dritte Verbindungszone (12, 13) anschließen, wobei diese vierte und fünfte Zone (14, 15) einerseits jeweils begrenzt sind durch eine fünfte innere ebene Fläche (17b, 18b), welche die vierte innere ebene Fläche (17a, 18a) verlängert, andererseits durch eine sechste äußere gekrümmte Fläche (24, 25), die bezüglich der dritten äußeren ebenen Fläche (22, 23) einen Vorsprung bildet, wobei die sechste äußere gekrümmte Fläche (24, 25) progressiv an die dritte äußere ebene Fläche (22, 23) anschließt.

2. Dichtung nach Anspruch 1,
**dadurch gekennzeichnet, dass** die sechste äußere gekrümmte Fläche (24, 25) sowohl von der vierten als auch der fünften konvexen Abschlusszone (14, 15) eine zentrale Kontaktzone (24b, 25b) bildet, deren Krümmungsradius $R_3$ größer ist als der Krümmungsradius $R_4$ einer Endzone (24a, 25a), die sich in der Nachbarschaft des freien Endes der zugehörigen konvexen Abschlusszone (14, 15) befindet.

3. Dichtung nach Anspruch 2,
**dadurch gekennzeichnet, dass** die zentrale Kontaktzone (24b, 25b) einen Krümmungsradius $R_3$ zwischen 0,45 und 0,65 mm aufweist.

4. Dichtung nach Anspruch 2 oder 3,
**dadurch gekennzeichnet, dass** die sechste äußere gekrümmte Fläche (24, 25) an die dritte äußere ebene Fläche (22, 23) über eine konkav gekrümmte Zone (24d, 25d) angeschlossen ist, deren Krümmungsradius $R_5$ etwa demjenigen ($R_4$) der Endzone (24a, 25a) der sechsten äußeren gekrümmten Fläche (24, 25) entspricht.

5. Dichtung nach einem der Ansprüche 2 bis 4,
**dadurch gekennzeichnet, dass** die zweite innere gekrümmte Fläche (16) der ersten Krümmungszone (11) in Form des C einen Krümmungsradius $R_2$ aufweist, der etwa demjenigen ($R_3$) der zentralen Kontaktzone (24b, 25b) sowohl der vierten als auch der fünften konvexen Zone (14, 15) entspricht.

6. Dichtung nach einem der Ansprüche 1 bis 5,
**dadurch gekennzeichnet, dass** die erste äußere gekrümmte Fläche (21) der ersten Krümmungszone (11) in Form des C einen Krümmungsradius $R_1$ aufweist, der größenordnungsmäßig doppelt so groß ist wie der Krümmungsradius $R_2$ der zweiten inneren gekrümmten Fläche (16).

7. Dichtung nach einem der Ansprüche 1 bis 6,
**dadurch gekennzeichnet, dass** die erste Dicke $e_1$ des Ringkörpers (11), die durch die Differenz zwischen dem Außendurchmesser $D_{ext}$ der Dichtung und dem Innendurchmesser $D_{int}$ der Dichtung definiert ist, größer ist als die zweite Dicke $e_2$ sowohl

der zweiten als auch der dritten Verbindungszone (12, 13) in der Höhe der Verbindung der dritten äußeren ebenen Fläche (22, 23) und der vierten inneren ebenen Fläche (17a, 18a) an der ersten äußeren gekrümmten Fläche (21) bzw. an der zweiten inneren gekrümmten Fläche (16), und dass die zweite Dicke $e_2$ ihrerseits größer ist als die dritte Dicke $e_3$ der zweiten und der dritten Verbindungszone (12, 13) in der Höhe von deren Verbindung mit der vierten bzw. der fünften konvexen Abschlusszone (14, 15).

8. Dichtung nach einem der Ansprüche 2 bis 5,
**dadurch gekennzeichnet, dass** der Abstand H zwischen den beiden zentralen Kontaktzonen (24b, 25b) in der gleichen Größenordnung liegt wie der Abstand L zwischen einerseits einer Ebene, welche die freien Enden der Abschlusszonen (14, 15) passiert und andererseits einer Ebene parallel zu einer Tangente an die erste äußere gekrümmte Fläche (21).

9. Dichtung nach einem der Ansprüche 1 bis 8,
**dadurch gekennzeichnet, dass** der Hub des Zusammendrückens der Abschlusszonen (14, 15) in der Größenordnung von 9 bis 20 Hundertstel Millimeter, vorzugsweise zwischen 15 und 20 Hundertstel Millimeter liegt.

10. Dichtung nach einem der Ansprüche 2 bis 9,
**dadurch gekennzeichnet, dass** die zentrale Kontaktzone (24b, 25b) der sechsten äußeren gekrümmten Fläche (24, 25) sich über mindestens einen Bogen von 40° erstreckt.

11. Dichtung nach einem der Ansprüche 1 bis 10,
**dadurch gekennzeichnet, dass** die Dichtung aus Inconel gefertigt ist und einen Überzug aus Silber mit einer Dicke von gleich oder mehr als 10 μm aufweist.

12. Dichtung nach einem der Ansprüche 1 bis 11,
**dadurch gekennzeichnet, dass** sie einen Außendurchmesser $D_{ext}$ zwischen 10 mm und 65 mm aufweist.

13. Dichtung nach einem der Ansprüche 1 bis 12,
**dadurch gekennzeichnet, dass** sie an einen Temperaturbereich in der Größenordnung von 20 K bis 930 K und an Drücke von gleich oder mehr als 200 Bar angepasst ist.

14. Dichtung nach einem der Ansprüche 1 bis 13,
**dadurch gekennzeichnet, dass** sie dazu ausgebildet ist, in eine Rille (140; 240) mit geringen Abmessungen eingesetzt zu werden, die an der Grenzfläche zwischen zwei Teilen (101, 102; 201, 202) ausgebildet ist, die zu verbinden sind, wobei die Rille (140; 240) einen im Wesentlichen rechteckigen Querschnitt aufweist, dessen Länge etwa 3 mm und dessen Höhe etwa 2 mm beträgt.

**Claims**

1. U-shaped static metal seal comprising an annular body (11) and first and second lips (12, 13) which are connected laterally to the annular body (11) and extend transversely with respect to the axis of the seal in such a way as to define, in axial half-section, the shape of a couched U, **characterized in that** the profile of the seal in axial half-section comprises a first curved part (11) in the shape of a C delimited by a curved outer first surface (21) free of corners and by a curved inner second surface (16) free of corners to form the annular body, second and third connecting parts (12, 13) constituting the first and second lips, each of the second and third connecting parts (12, 13) comprising a flat outer third surface (22, 23) perpendicular to the axis of the seal and connected tangentially to the curved outer first surface (21), and a flat inner fourth surface (17a, 18a) connected tangentially to the curved inner second surface (16) and inclined by an angle (i) of between 15° and 30° with respect to a plane of symmetry of the seal perpendicular to the axis of the seal, and convex terminal fourth and fifth parts (14, 15) which provide sealing and are connected to the second and third connecting parts (12, 13), these fourth and fifth parts (14, 15) each being delimited, on the one hand, by a flat inner fifth surface (17b, 18b) extending the flat inner fourth surface (17a, 18a) and, on the other hand, by a curved outer sixth surface (24, 25) projecting with respect to the flat outer third surface (22, 23), the said curved outer sixth surface (24, 25) being connected progressively to the flat outer third surface (22, 23).

2. Seal according co Claim 1, **characterized in that** the curved outer sixth surface (24, 25) of each of the convex terminal fourth and fifth parts (14, 15) has a central contact region (24b, 25b) the radius of curvature $R_3$ of which is greater than the radius of curvature $R_4$ of an end region (24a, 25a) situated near the free end of the corresponding convex terminal part (14, 15).

3. Seal according to Claim 2, **characterized in that** the central contact region (24b, 25b) has a radius of curvature $R_3$ of between 0.45 and 0.65 mm.

4. Seal according to Claim 2 or Claim 3, **characterized in that** the curved outer sixth surface (24, 25) is connected to the flat outer third surface (22, 23) by a curved concave region (24d, 25d) the radius of curvature $R_5$ of which is similar to that ($R_4$) of the end region (24a, 25a) of the curved outer sixth surface (24, 25).

5. Seal according to any one of Claims 2 to 4, **characterized in that** the curved inner second surface (16) of the first curved part (11) in the shape of a C has a radius of curvature $R_2$ similar to that ($R_3$) of the central contact region (24b, 25b) of each of the convex fourth and fifth parts (14, 15).

6. Seal according to any one of Claims 1 to 5, **characterized in that** the curved outer first surface (21) of the curved first part (11) in the shape of a C has a radius of curvature $R_1$ which is of the order of twice the radius of curvature $R_2$ of the curved inner second surface (16).

7. Seal according to any one of Claims 1 to 6, **characterized in that** the first thickness $e_1$ of the annular body (11), which thickness is defined by the difference between the external diameter $D_{ext}$ of the seal and the internal diameter $D_{int}$ of the seal is greater than the second thickness $e_2$ of each of the second and third connecting parts (12, 13) where the flat outer third surface (22, 23) and the flat inner fourth surface (17a, 18a) meet the curved outer first surface (21) and the curved inner second surface (16) respectively, and **in that** the said second thickness $e_2$ is itself greater than the third thickness $e_3$ of each of the second and third connecting parts (12, 13) where they meet the convex terminal fourth and fifth parts (14, 15).

8. Seal according to any one of Claims 2 to 5, **characterized in that** the distance H between the two central contact regions (24b, 25b) is of the same order of magnitude as the distance L between, on the one hand, a plane passing through the free ends of the terminal parts (14, 15) and, on the other hand, a parallel plan tangential to the curved outer first surface (21).

9. Seal according to any one of Claims 1 to 8, **characterized in that** the thickness $\underline{e}$ by which the terminal parts (14, 15) are crushed is of the order of 9 to 20 hundredths of a millimetre, and preferably between 15 and 20 hundredths of a millimetre.

10. Seal according to any one of Claims 2 to 9, **characterized in that** the central contact region (24b, 25b) of the curved outer sixth surface (24, 25) extends at least over a 40° arc.

11. Seal according to any one of Claims 1 to 10, **characterized in that** it is made of Inconel and has a silver coating the thickness of which is greater than or equal to 10 microns.

**12.** Seal according to any one of Claims 1 to 11, **characterized in that** it has an external diameter $D_{ext}$ of between 10 mm and 65 mm.

**13.** Seal according to any one of claims 1 to 12, **characterized in that** it is designed for a temperature range of the order of 20 K to 930 K and for pressures lower than or equal to 200 bar.

**14.** Seal according to any one of Claims 1 to 13, **characterized in that** it is designed to be arranged in a groove (140; 240) of small bulk foamed at the interface between two components (101, 102; 201, 202) that are to be connected, the said groove (140; 240) having a roughly rectangular cross section the width of which is about 3 mm and the height of which is about 2 mm.

FIG.1

FIG.2

FIG.3

FIG.4

FIG.5

FIG.6